# EUROPEAN PATENT SPECIFICATION

(11) **EP 2 719 548 B1**
(45) Date of publication and mention of the grant of the patent: **27.04.2016**
(21) Application number: 12188282.3
(22) Date of filing: 12.10.2012
(51) Int. Cl.: A01D 34/82, B60B 5/02, B60B 3/00, B60B 3/02, B60B 35/04, B60B 37/10, B60B 3/12

(54) **Wheel assembly**
Radanordnung
Ensemble de roue

(43) Date of publication of application: 16.04.2014
(73) Proprietor: ROBERT BOSCH GMBH, 70442 Stuttgart (DE)
(72) Inventor: Ling, Matthew, IP6 8QR Ipswich Suffolk (GB); Armstrong, Gavin, IP30 9GH Elmswell Suffolk (GB); Taylor, John, IP24 1RS Illington Norfolk (GB)

(56) References cited:
- DE-A1- 3 034 457
- US-A- 5 884 982
- US-A- 5 902 018
- US-A1- 2003 117 009

## Description

The present invention relates to a wheel assembly, and in particular to a wheel assembly comprising a wheel and a hub.

The present invention will be described with reference to wheel assemblies for lawnmowers, however it will be apparent that the invention is equally suitable for use in any product or device having a wheel for which the benefits of the invention are realised. Reference to lawnmowers should therefore not be considered to limit the scope of the invention to such application.

One known wheel assembly is disclosed in U.S. Pat. 5,884,982. The wheel assembly employs a sleeve element as an intermediate member between a central axle and the wheel. The sleeve element renders the entire wheel assembly a simple manually assembled "snap-fit".

Product manufacturers will often provide a number of different models within the same product range, and they may further provide a number of different ranges of the same general product type, each with its own series of specific models. In the case of lawnmowers for example, models or ranges may be defined by motor/engine type, motor/engine size or power, cutting type, cutting width, grass-collection features, durability, etc. While a wide selection of different models increases choice for consumers and allows a manufacturer to reach different markets, it does also increase the complexity of the manufacturing process. Specifically, in the case of wheeled lawnmowers, the applicants have found that a large number of different wheel designs or specifications exist to cover the full range of models offered. For example, a separate wheel design may be necessary for each different axle diameter or axle interface (e.g. interface length or shape). Having a large number of different wheel types is expensive both in terms of initial tooling costs for each wheel design and in terms of inventory and storage space required during production.

The present invention seeks to reduce the number of different variations of wheel design needed across a product range, with consequential saving in costs and storage space. The present invention also seeks to simplify the assembly process, which has a further advantage in that fitment of the wheels by the end user is facilitated, allowing the product to be shipped in a smaller carton. Many of the optional and preferred features of the present invention further assist in end-user fitment, as will become apparent below.

In accordance with the invention, there is provided a wheel assembly comprising a wheel and a hub, wherein the hub is configured to receive an axle about whose axis the wheel assembly rotates in use and wherein the hub and the wheel are configured for snap-fit engagement to form the wheel assembly, the hub and the wheel having mating surfaces which contact or lie adjacent to one another when engaged, the hub being substantially cylindrical and having a plurality of projections on the mating surface thereof located at spaced intervals around the circumference of the hub which engage with the mating surface of the wheel to provide the snap-fit engagement, wherein each projection is located on a reduced-diameter section of the surface of the hub, with surface sections of full diameter provided circumferentially in between each reduced-diameter section

In preferred embodiments, the hub is provided with an aperture which receives the axle in use. The aperture may be open all the way through the hub, or it may be closed at the distal end effectively forming a closed passage. The aperture cross-section and depth will be dependent on the cross-sectional shape of the axle and the desired interface length between the hub and the axle. The aperture may be cylindrical or generally cylindrical.

Likewise, in preferred embodiments, the wheel is provided with an aperture for receiving the substantially-cylindrical hub when assembled. The aperture may be open all the way through the wheel, or it may be closed at the distal end so that it effectively forms a closed passage. The aperture cross-section and depth will be dependent on the cross-sectional shape of the hub (or vice versa) and the desired interface length between the hub and the axle.

When the hub and the wheel are assembled, it is not necessary for the whole of the hub to be in engagement with the wheel. It is possible for only part of the hub to be in engagement with the wheel, or inside the wheel aperture. For example, the hub may include a flange which extends behind the wheel when assembled. Preferably however, the hub fits substantially completely within the wheel when assembled.

The snap-fit engagement between the hub and the wheel may be further provided by one or more corresponding projections or indentations on the mating surface of the wheel which engage with the projections on the hub. In this arrangement, the one or more projections on the hub are preferably tapered, the taper increasing in a rearward direction relative to the direction of engagement of the hub with the wheel. The taper facilitates insertion of the hub into the wheel and provides an improved snap-fit engagement.

While any suitable number of projections may be provided, it has been found that four projections spaced around the circumference of the hub work particularly well in some applications. Three projections may also provide an acceptable function, however.

As mentioned above, each projection is located on a section of the surface of the hub which has a reduced diameter compared to that of the rest of the hub. The projection surface may be curved, in which case the curve may have a radius of curvature which is greater than that of the hub, which will provide a less-curved or flatter surface in the area of the projection. Alternatively, the projection surface may be flat or substantially flat.

Preferably each projection is located towards the distal end of the hub, in between the distal end and the centre point of the hub. In this case, each projection surface preferably extends from the distal end of the hub towards the proximal end.

Between each reduced-diameter projection surface circumferentially, surface sections of full diameter are provided which form a continuation of the mating surface of the remainder of the hub. Preferably, these full-diameter sections have the same diameter as the remainder of the hub. These sections provide further support to the assembly by increasing the contact area between the mating surfaces of the hub and wheel. Preferably, these sections are supported by ribs which transmit forces directly between the axle and the wheel.

It may be necessary to orientate the hub relative to the wheel during insertion so that the snap-fit components correctly align with one another. Preferably therefore, the wheel assembly includes locating means to correctly orientate the hub in the wheel when the components are engaged. The locating means may comprise one or more corresponding pairs of projections and indentations provided on the mating surfaces of the hub and the wheel. Preferably, each projection comprises an axially-extending rib and each indentation comprises an axially-extending channel. The at least one rib is preferably provided on the mating surface of the hub and the at least one channel is provided on the mating surface of the wheel. The locating means, particularly in the form of one or more pairs of axially-extending ribs and channels, also helps to prevent relative rotation between the hub and the wheel and helps to transmit rotational forces between the hub and the wheel.

While any suitable number of corresponding pairs of ribs and channels may comprise the locating means, the applicants have found that four ribs on the hub and four corresponding channels on the wheel (or vice versa) work particularly well. With fewer than this number, there is potential for the components to jam rather than rotate relative to one another; the maximum amount of rotation which may be required for alignment is also greater. Preferably the same number of ribs as there are projections are provided on the hub, and more preferably each rib is aligned axially with a corresponding projection.

In order to facilitate insertion of the hub, orienting means may also be provided to guide the locating means into correct alignment. Preferably, the orienting means comprises angled surfaces which form a V towards the channel and which engage the rib during engagement of the hub and wheel, causing rotation of the hub relative to the wheel until the rib and the corresponding channel are aligned.

The hub is preferably made of a plastics material, which is more suitable for bearing purposes than other materials and will therefore exhibit improved running properties on the axle. The wheel may conveniently also be made of a plastics material.

The present invention also extends to a hub for use in a wheel assembly as described, and also to a lawnmower including a wheel assembly as described.

In its various aspects, including the optional and preferred features, the present invention reduces the number of different variations of wheel design needed across a product range by having interchangeable hubs. The wheel part of the assembly will be common across all applications using that wheel size, and only the hub design will need to change for each specific application, taking into account axle diameter, axle cross-section, axle-hub interface length, etc. Tooling and manufacturing costs will be reduced since the hub is a smaller component to design and produce for each application, and further economies can be achieved by having a standard wheel design which can be mass-produced in larger numbers as needed. Storage space for the application-specific component will be reduced compared to the prior art.

The present invention also simplifies the assembly process by virtue of the snap-fit engagement of the hub into the wheel. All that is necessary is for the appropriate hub to be selected and inserted into a standard wheel to achieve the correct wheel assembly. No special tools or fixings are required, by virtue of the snap-fit engagement.

The hub may be attached to the axle by any suitable means, including screws or other fixings. Preferably however, screws are avoided since these would require handling on the production line and would complicate the process. Screws are also known to loosen or fail in service. One preferred method of attachment is to use a ratchet cap, which is a simple and effective means of attachment. Once the wheel and hub are assembled with the snap-fit engagement and the assembly attached to the axle with a ratchet cap, the parts cannot easily be disassembled without the use of tools.

The present invention provides a further advantage, in that the simple, fixing- and tool-free assembly could be carried out by the end user. Fitted wheels may increase the dimensions of a product, and in the case of a lawnmower where the wheels are traditionally mounted outside the cutting deck, this size increase can be significant. By requiring the end user to fit the wheels themselves, the amount of packaging and the size of the carton can be reduced, which will provide significant environmental and cost savings. The hubs could be supplied pre-fitted to the axles, so that the end user simply has to push the wheels onto the hubs until they snap-fit into position, without the need for screws, washers, clips, etc. The locating and orienting means of the preferred embodiments discussed above will facilitate the alignment of the components, and no tools are required.

An embodiment of the invention will now be described by way of example only and with reference to the accompanying drawings, in which:
Fig. 1 shows an exploded perspective view of a wheel assembly for a lawnmower according to the invention;
Fig. 2 shows a perspective view of the hub component of the wheel assembly of Fig.1;
Fig. 3 shows a sectional view of the hub component with a cranked axle inserted;
Fig. 4 shows a close-up perspective view of the central part of the wheel component of the wheel assembly of Fig.1;
Fig. 5 shows an axial cross-sectional view of the hub when engaged with the wheel;
Fig. 6 shows an end view of the hub when engaged with the wheel; and
Fig. 7 shows a radial cross-sectional view of the hub when engaged with the wheel.

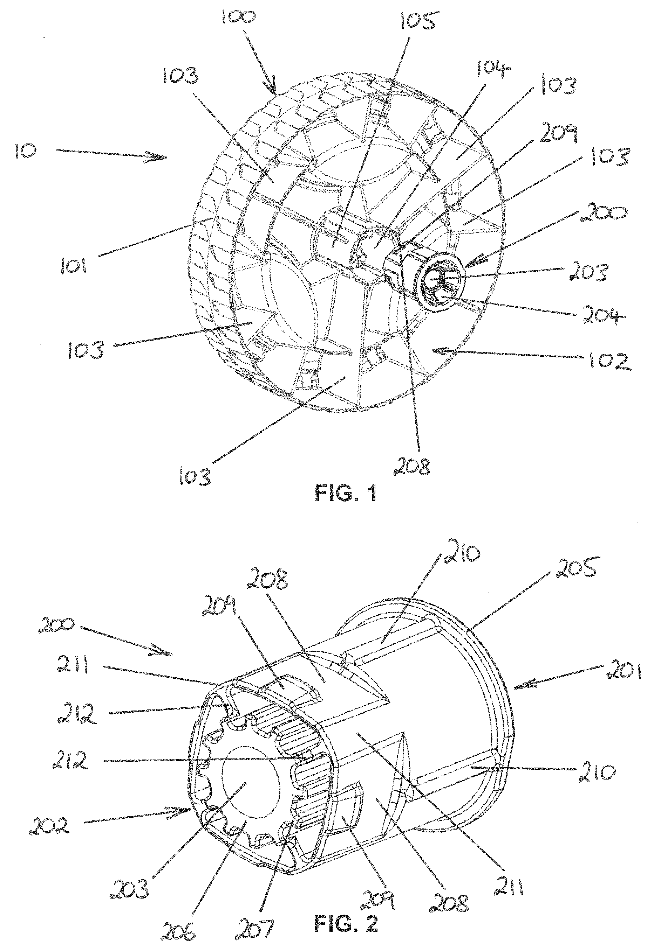

With reference to Fig. 1, wheel assembly 10 comprises wheel 100 and hub 200. Wheel 100 is cylindrical in shape with a tread surface 101. Fig. 1 shows the interior face 102 of wheel 100, which will not generally be seen in use as it will face the lawnmower (not shown) to which it is attached. The exterior face of wheel 100 will typically be more aesthetic in design, however the interior face 102 is more functional and generally comprises a number of strengthening walls 103 and other features to provide the wheel with rigidity while saving on material and weight. At the centre of the wheel is the aperture 104 for receiving the hub 200. Aperture 104 is defined by a generally cylindrical wall 105, the features of which will be described in more detail below.

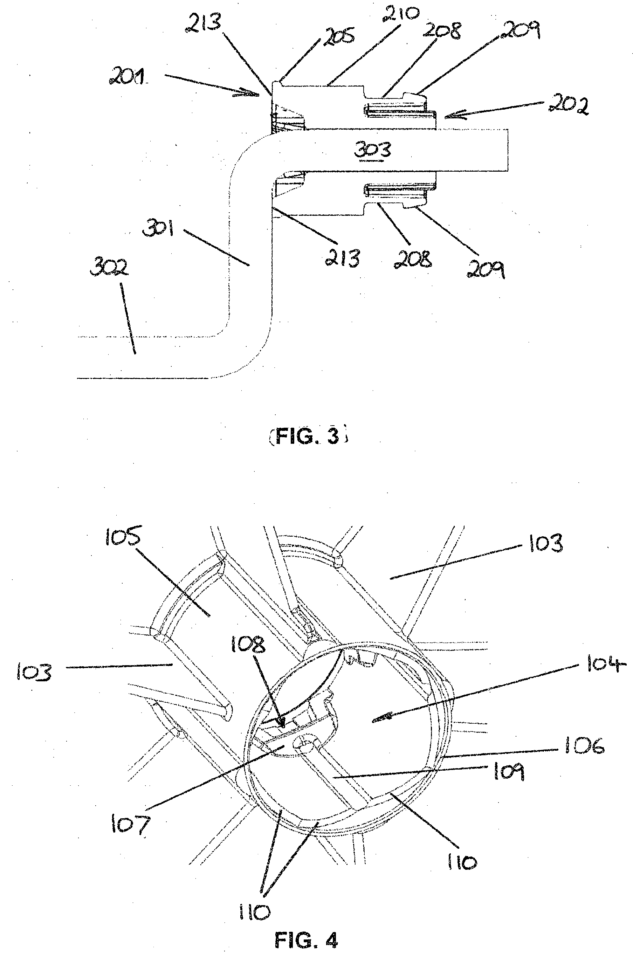

With reference to Figs. 1 and 2, hub 200 has a generally cylindrical form. The hub has a proximal end 201 which is circular in cross-section, and a distal end 202 which is squared-off to a degree. Hub 200 is provided with an aperture 203 for receiving the axle (shown in Fig. 3). At the proximal end 201 of the hub, angled surfaces 204 (Figs. 1, 3 and 5) are provided to guide the axle into the aperture 203 during the insertion process. A small flange 205 is also provided which abuts the rim 106 of the cylindrical wall 105 of the wheel 100 when assembled (Fig. 4). At the distal end 202 (Fig. 2) of the hub 200, an internal wall 206 defines aperture 203 and this is surrounded by fins 207 to provide strength to the wall 206.

With reference to Fig. 2, the snap-fit and locating means components of the hub 200 will be described in more detail. As mentioned above, the distal end 202 of the hub is squared-off to a degree and has four flatter surfaces 208 of smaller diameter than the overall diameter of the cylindrical hub 200. Surfaces 208 extend from the distal end 202 up to about half-way towards the proximal end 201. On each of the surfaces 208 is provided a projection 209 which is the first component of the snap-fit mechanism in this preferred embodiment. Projection 209 has a generally tapering profile, starting at the distal end 202 of the hub and widening towards the rear of the projection. The taper ends relatively abruptly at the wider end of the projection 209.

The locating means components on the hub 200 are the four axially-extending ribs 210, two of which are shown in Fig. 2. They extend towards the proximal end 201 from the edge of each flattened surface 208 of the squared-off section, so similarly run along about half the axial length of the hub 200.

Between each surface 208, the cross-sectional profile of the hub 200 is cylindrical and has substantially the same diameter as the proximal end 201, as can be seen in Fig. 2. These full-diameter sections 211 provide further support to the assembly by increasing the contact area between the mating surfaces of the hub 200 and wheel 100. They are provided with specific support ribs 212 to transmit forces directly between the axle and the wheel.

Fig. 3 shows a sectional view of hub 200 with an axle 300 inserted. Axle 300 is of a cranked design, having a portion 301 which is at 90 degrees to the axes of the other two portions, inner portion 302 and outer portion 303. This design of axle is used to allow the height of the lawnmower cutting deck to be adjusted by pivoting the axle about the inner portion 302 and securing it in place once the desired height has been set.

Axle outer portion 303 is shown inserted in hub 200. Means for fixing the hub in place, such as a standard push-on ratchet plate, are not shown. An important beneficial feature of the invention, when used with a cranked axle, is that the annular surface 213 at the proximal end 201 of the hub, part of which is formed by flange 205, forms a bearing surface for the cranked portion 301 of axle 300. This provides a convenient arrangement for lateral location of the wheel while accommodating manufacturing variations in the exact form of the axle in the bend zone between straight portions 301 and 303.

Fig. 4 shows the centre of the wheel 100 in more detail, and specifically the cylindrical wall 105 which defines aperture 104 for receiving the hub 200. The snap fit and locating means components of the wheel 100 will now be described in more detail.

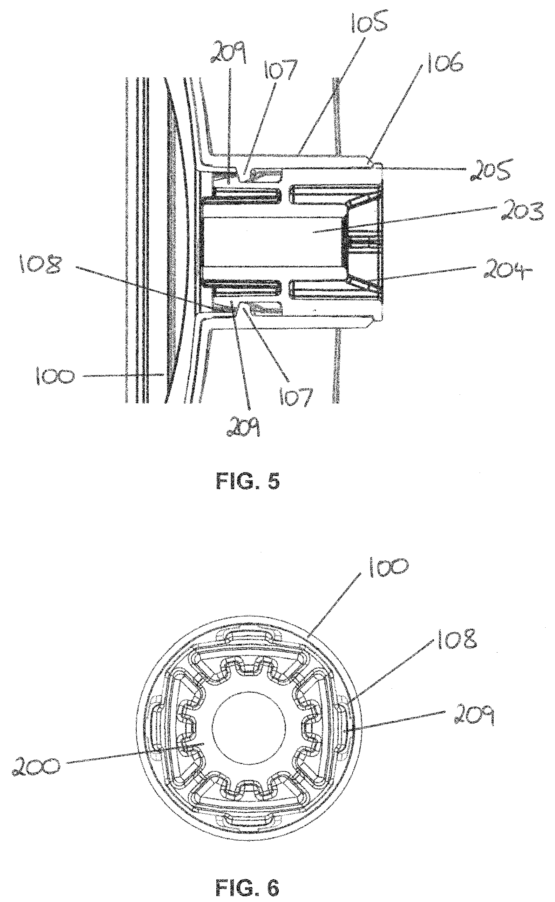

The second component of the snap-fit mechanism is provided on the inside surface of the cylindrical wall 105 and comprises a tapered projection 107 which extends into the aperture 104. Tapered projection 107 also defines a recess 108 which is sized and shaped to retain projection 209 of the hub 200 when the components are engaged. With reference to Fig. 5, as the hub 200 is pushed into aperture 104, the surfaces of the two tapered projections 107 and 209 will come into contact. As the hub is pushed further into the aperture, flattened surfaces 208 will deform inwards as the hub projections 209 are forced inwards by the wheel projections 107. At the point when the tapered surfaces end abruptly, the hub projections 209 will snap back to their original radial positions, into the recesses 108. In this position, the rear edges of the projections 107 and 209 are in mating engagement with one another, retaining the hub in the wheel.

Fig. 6 shows an end view of the hub 200 when engaged with the wheel 100, with the projections 209 "snapped home" into recesses 108.

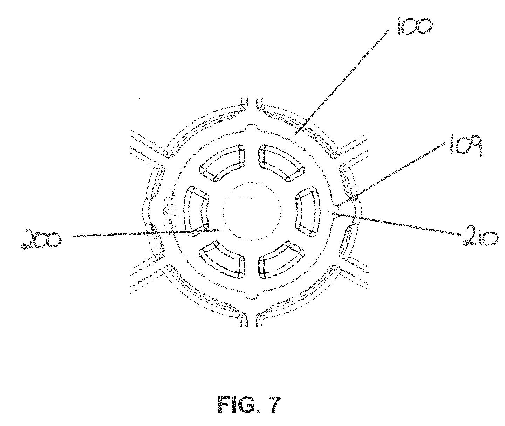

Returning to Fig. 4, the locating means components of the wheel 100 are four axially-extending channels 109 formed in the inside surface of cylindrical wall 105. These channels engage with ribs 210, four of which are provided on the hub 200, thereby preventing relative rotation between the components and serving correctly to align the snap-fit components. The engaged position is shown in Fig. 7.

Orienting means are provided on the wall 105 of the wheel aperture, which serve to guide the ribs 210 into alignment with the channels 109. The orienting means comprises angled surfaces 110 which form a shallow V towards each channel in an axial direction, with the channel being located at the point of the V. The depth of the V may be about 5mm. When the hub is inserted into the aperture, the angled surfaces 110 will contact the tips of the ribs 210 and guide them towards the channels 109 by rotating the hub relative to the wheel until the ribs and channels are aligned, at which point insertion continues without further relative rotation. This feature allows the hub to be inserted at any rotational position relative to the wheel, and the hub will be automatically rotated to the correct aligned position.

As discussed above, the invention allows the use of different hub configurations with a standard, universal wheel design. The assembly of the hub and wheel is simplified by virtue of the snap-fit engagement of the hub into the wheel, avoiding the need for tools or fixings. The locating means and orienting means provide automatic alignment of the hub and wheel and a secure engagement once the components are assembled.

## Claims

1. A wheel assembly (10) comprising a wheel (100) and a hub (200), wherein the hub (200) is configured to receive an axle (300) about whose axis the wheel assembly (10) rotates in use and wherein the hub (200) and the wheel (100) are configured for snap-fit engagement to form the wheel assembly (10), the hub (200) and the wheel (100) having mating surfaces which contact or lie adjacent to one another when engaged, the hub (200) being substantially cylindrical and having a plurality of projections (209) located at spaced intervals around the circumference of the hub (200), wherein each projection (209) is located on a reduced-diameter section (208) of the surface of the hub (200), with surface sections (211) of full diameter provided circumferentially in between each reduced-diameter section (208), **characterised in that** the hub (200) having the plurality of projections (209) on the mating surface thereof, which projections (209) engage with the mating surface of the wheel (100) to provide the snap-fit engagement.

2. The wheel assembly (10) of claim 1, in which the snap-fit engagement is further provided by one or more corresponding projections (107) or indentations on the mating surface of the wheel (100) which engage with the projections (209) on the hub (200).

3. The wheel assembly of claim 1 or 2, in which the one or more projections (209) on the hub (200) are tapered, the taper increasing in a rearward direction relative to the direction of engagement of the hub (200) with the wheel (100).

4. The wheel assembly (10) of any preceding claim, in which the hub (200) is provided with four projections (209) spaced around the circumference of the hub (200).

5. The wheel assembly (10) of any preceding claim, in which the full-diameter surface sections (211) are supported by ribs (212) which transmit forces directly between the axle (300) and wheel (100).

6. The wheel assembly (10) of any preceding claim, in which the wheel assembly (10) includes locating means to correctly orientate the hub (200) relative to the wheel (100) when engaged.

7. The wheel assembly (10) of claim 6, in which the locating means comprises at least one axially-extending rib (210) provided on the mating surface of the hub (200) and at least one corresponding axially-extending channel (109) provided on the mating surface of the wheel (100).

8. The wheel assembly (10) of claim 7, in which the same number of ribs (210) are provided on the mating surface of the hub (200) as there are projections (209).

9. The wheel assembly (10) of claim 8, in which each rib (210) is aligned axially with a corresponding projection (209).

10. The wheel assembly (10) of any of claims 7 to 9, in which the hub (200) is provided with four axially-extending ribs (210) and the wheel (100) is provided with four axially-extending channels (109).

11. The wheel assembly (10) of any of claims 7 to 10, further comprising orienting means to guide the locating means into correct alignment, the orienting means comprising angled surfaces (110) which form a V towards the channel and which engage the or each rib (210) during engagement of the hub (200) and wheel (100), causing rotation of the hub (200) relative to the wheel (100) until the rib (210) and the channel (109) are aligned.

12. A lawnmower including a wheel assembly (10) as claimed in claim 1.

## Patentansprüche

1. Radanordnung (10), die ein Rad (100) und eine Nabe (200) umfasst, wobei die Nabe (200) konfiguriert ist, um eine Radachse (300) aufzunehmen, um deren Achse sich die Radanordnung (10) im Gebrauch dreht, und wobei die Nabe (200) und das Rad (100) für einen Schnappsitzeingriff konfiguriert sind, um die Radanordnung (10) zu bilden, wobei die Nabe (200) und das Rad (100) Passflächen haben, die beim Eingriff einander berühren oder angrenzend aneinander liegen, wobei die Nabe (200) im Wesentlichen zylindrisch ausgebildet ist und mehrere Vorsprünge (209) hat, die um den Umfang der Nabe (200) beabstandet angeordnet sind, wobei sich jeder Vorsprung (209) in einem einen reduzierten Durchmesser aufweisenden Bereich (208) der Oberfläche der Nabe (200) befinden, wobei Oberflächenbereiche (211) mit vollem Durchmesser am Umfang zwischen jedem einen reduzierten Durchmesser aufweisenden Bereich (208) vorgesehen sind, **dadurch gekennzeichnet, dass** die Nabe (200) die mehreren Vorsprünge (209) an den Passflächen davon aufweist, wobei die Vorsprünge (209) in die Passfläche des Rades (100) eingreifen, um für einen Schnappsitzeingriff zu sorgen.

2. Radanordnung (10) nach Anspruch 1, bei der der Schnappsitzeingriff weiterhin durch einen oder mehrere entsprechende Vorsprünge (107) oder Vertiefungen an der Passfläche des Rades (100) bereitgestellt wird, die in die Vorsprünge (209) an der Nabe (200) eingreifen.

3. Radanordnung nach Anspruch 1 oder 2, bei der der eine oder die mehreren Vorsprünge (209) an der Nabe (200) konisch ausgebildet sind, wobei die konische Ausbildung in einer Rückwärtsrichtung im Verhältnis zur Richtung des Eingriffs der Nabe (200) in das Rad (100) zunimmt.

4. Radanordnung (10) nach einem der vorstehend aufgeführten Ansprüche, bei der die Nabe (200) mit vier Vorsprüngen (209) ausgestattet ist, die um den Umfang der Nabe (200) herum beabstandet sind.

5. Radanordnung (10) nach einem der vorstehend aufgeführten Ansprüche, bei der die einen vollen Durchmesser aufweisenden Oberflächenbereiche (211) durch Rippen (212) verstärkt sind, die Kräfte direkt zwischen der Radachse (300) und dem Rad (100) übertragen.

6. Radanordnung (10) nach einem der vorstehend aufgeführten Ansprüche, bei der die Radanordnung (10) Anordnungsmittel beinhaltet, die beim Eingriff für eine korrekte Orientierung der Nabe (200) im Verhältnis zum Rad (100) sorgen.

7. Radanordnung (10) nach Anspruch 6, bei der die Anordnungsmittel mindestens eine sich axial erstreckende Rippe (210), die an der Passfläche der Nabe (200) vorgesehen ist, sowie mindestens einen entsprechenden, sich axial erstreckenden Kanal (109) umfassen, der an der Passfläche des Rades (100) vorgesehen ist.

8. Radanordnung (10) nach Anspruch 7, bei der die Anzahl der Rippen (210), die an der Passfläche der Nabe (200) vorgesehen sind, der Anzahl der Vorsprünge (209) entspricht.

9. Radanordnung (10) nach Anspruch 8, bei der jede Rippe (210) axial zu einem entsprechenden Vorsprung (209) ausgerichtet ist.

10. Radanordnung (10) nach einem der Ansprüche 7 bis 9, bei der die Nabe (200) mit vier sich axial erstreckenden Rippen (210) und das Rad (100) mit vier sich axial erstreckenden Kanälen (109) ausgestattet sind.

11. Radanordnung (10) nach einem der Ansprüche 7 bis 10, die weiterhin Orientierungsmittel umfasst, um die Anordnungsmittel hin zu einer korrekten Ausrichtung zu führen, wobei die Orientierungsmittel Winkelflächen (110) umfassen, die hin zum Kanal ein V bilden und in die oder jede Rippe (210) während des Eingriffs der Nabe (200) und des Rades (100) eingreifen, wodurch eine Drehung der Nabe (200) im Verhältnis zum Rad (100) bewirkt wird, bis die Rippe (210) und der Kanal (109) ausgerichtet sind.

12. Rasenmäher, der eine Radanordnung (10) nach Anspruch 1 beinhaltet.

## Revendications

1. Ensemble roue (10) comprenant une roue (100) et un moyeu (200), dans lequel le moyeu (200) est configuré pour recevoir un essieu (300) autour de l'axe duquel tourne l'ensemble roue (10) lors de l'utilisation et dans lequel le moyeu (200) et la roue (100) sont configurés pour entrer en prise par encliquetage afin de constituer l'ensemble roue (10), le moyeu (200) et la roue (100) comportant des surfaces qui sont en contact l'une avec l'autre ou se jouxtent quand ils sont en prise, le moyeu (200) étant sensiblement cylindrique et comportant une pluralité de saillies (209) situées à intervalles autour de la circonférence du moyeu (200), dans lequel chaque saillie (209) est située sur une section (208) à diamètre réduit de la surface du moyeu (200), des sections (211) de surface à diamètre complet étant disposées sur sa circonférence entre chaque section (208) à diamètre réduit,
**caractérisé en ce que** le moyeu (200) comporte la pluralité de saillies (209) sur sa surface de contact, lesquelles saillies (209) entrent en prise avec la surface de contact de la roue (100) pour assurer l'entrée en prise par encliquetage.

2. Ensemble roue (10) selon la revendication 1, dans lequel l'entrée en prise par encliquetage est en outre assurée par une ou plusieurs saillies (107) ou renfoncements correspondants sur la surface de contact de la roue (100), qui entrent en prise avec les saillies (209) sur le moyeu (200).

3. Ensemble roue selon la revendication 1 ou 2, dans lequel une ou plusieurs saillies (209) sur le moyeu (200) sont à section croissante, la section augmentant dans une direction vers l'arrière par rapport à la direction d'entrée en prise du moyeu (200) avec la roue (100).

4. Ensemble roue (10) selon l'une quelconque des revendications précédentes, dans lequel le moyeu (200) est pourvu de quatre saillies (209) espacées autour de la circonférence du moyeu (200).

5. Ensemble roue (10) selon l'une quelconque des revendications précédentes, dans lequel les sections (211) de surface à diamètre complet sont soutenues par des nervures (212) qui transmettent directement les forces entre l'essieu (300) et la roue (100).

6. Ensemble roue (10) selon l'une quelconque des revendications précédentes, comprenant en outre un moyen de repérage pour orienter correctement le moyeu (200) par rapport à la roue (100) quand ils sont en prise.

7. Ensemble roue (10) selon la revendication 6, dans lequel le moyen de repérage comprend au moins une nervure (210) à extension axiale disposée sur la surface de contact du moyeu (200) et au moins une cannelure (109) à extension axiale correspondante disposée sur la surface de contact de la roue (100).

8. Ensemble roue (10) selon la revendication 7, dans lequel on trouve le même nombre de nervures (210) sur la surface de contact du moyeu (200) qu'il y a de saillies (209).

9. Ensemble roue (10) selon la revendication 8, dans lequel chaque nervure (210) est alignée axialement avec une saillie (209) correspondante.

10. Ensemble roue (10) selon l'une quelconque des revendications 7 à 9, dans lequel le moyeu (200) est pourvu de quatre nervures (210) à extension axiale et la roue (100) est pourvue de quatre cannelures (109) à extension axiale.

11. Ensemble roue (10) selon l'une quelconque des revendications 7 à 10, comprenant en outre un moyen d'orientation pour guider le moyen de repérage dans l'alignement correct, le moyen d'orientation comprenant des surfaces (110) obliques qui forment un V vers la cannelure et qui entrent en contact avec la ou chaque nervure (210) lors de l'enclenchement du moyeu (200) et de la roue (100), faisant tourner le moyeu (200) par rapport à la roue (100) jusqu'à ce que la nervure (210) et la cannelure (109) soient alignés.

12. Tondeuse à gazon comprenant un ensemble roue (10) selon la revendication 1.
